# EUROPEAN PATENT SPECIFICATION

(11) **EP 3 057 393 B1**
(45) Date of publication and mention of the grant of the patent: **07.03.2018**
(21) Application number: 14854453.9
(22) Date of filing: 09.10.2014
(51) Int. Cl.: A01B 3/00, A01B 17/00, A01B 63/111

(54) **DEPTH ADJUSTMENT DEVICE FOR A PLOUGH SKIMMER**
TIEFENEINSTELLUNGSVORRICHTUNG FÜR EINEN PFLUGSKIMMER
DISPOSITIF DE RÉGLAGE DE LA PROFONDEUR POUR CHARRUE POUR LABOUR À PLAT

(30) Priority: 18.10.2013 NO 20131387
(43) Date of publication of application: 24.08.2016
(73) Proprietor: Kverneland Group Operations Norway AS, 4355 Kvernaland (NO)
(72) Inventor: SIGMUNDSTAD, Svein, 4355 Kvernaland (NO)
(74) Representative: Håmsø Patentbyrå AS
(86) International application number: PCT/NO2014/050191
(87) International publication number: WO 2015/057080

(56) References cited:
- WO-A1-94/10826
- CN-U- 201 629 948
- DE-A1- 4 022 156
- FR-A1- 2 466 939
- GB-A- 115 198
- GB-A- 323 062
- GB-A- 776 762
- GB-A- 2 070 902
- US-A- 533 337

## Description

The invention relates to a device for the depth adjustment of a plough skimmer in a plough, in which a shank that extends up from the plough skimmer is adjustably attached in a guide arrangement in a mounting bracket arranged on the plough. From WO94/10826A it is known to use a so-called plough skimmer in front of every plough body in a plough for soil preparation. The purpose of the plough skimmer is primarily to cut off a border portion of the edge of each furrow slice before it is turned over so that the ploughing gets a more even surface and the furrow slices are closed. Thereby there will be, among other things, reduced possibilities for plants to grow up from the downward-facing slice surface, which, in meadow-ploughing, is densely studded with old plant material. There is a need to be able to adjust the depth of each plough skimmer in order to adapt the vertical position of the plough bodies to the ploughing depth of the plough. With today's technology, this is done individually on the plough skimmers one by one, the plough-skimmer shank which extends up from the plough skimmer to an attachment on a plough beam being attached by means of a bracket, by loosening at least two screws, a clamping screw that presses the bracket together around the shank and a positioning screw that is threaded in the bracket and enters one of a series of recesses regularly spaced in a side surface of the shank to provide a secure position before the shank is clamped with the bracket. The drawback of this and similar arrangements is that it is laborious and time-consuming to adjust the depth of the plough skimmers, especially in a reversible plough with two plough skimmers on each plough beam.
The invention has for its object to remedy or reduce at least one of the drawbacks of the prior art or at least provide a useful alternative to the prior art.
The object is achieved through features, which are specified in the description below and in the claims that follow.

A device for the depth adjustment of a plough skimmer on a plough has been provided, in which a mounting bracket for the plough skimmer is provided with means for fixing the plough skimmer in a preferred position on a plough beam. An actuator is attached to the mounting bracket and is connected to an end portion of a shank extending up from the plough skimmer into a guide arrangement on the mounting bracket. In a lower portion of the guide arrangement, an adjusting screw is preferably arranged, which, when the plough skimmer is in a preferred position, extends into one of the many recesses regularly spaced in the side surface of the shank.

In a first embodiment, the actuator is formed as a link-arm arrangement including a central adjustment bracket displaceable substantially transversely to the longitudinal direction of the shank, along a horizontal portion of the plough beam. The displacement of the adjustment bracket is brought about with a threaded rod that is rotated manually by means of a spanner engaging with an end portion of the threaded rod, or by means of a motor. A first end portion of a link arm is pivotally attached to the adjustment bracket. A second end portion of the outer arm is pivotally attached to an end portion of the shank that extends up from the plough skimmer into the guide arrangement in the mounting bracket. When the adjusting screw has been screwed out of the recess, the depth position of the plough skimmer can be changed by the adjustment bracket being displaced. The displacement moves the end portions of the link arm and pulls or pushes the shank of the plough skimmer up or down in the mounting bracket.

In a second embodiment, the actuator is formed as a rotatable disc, wherein an upper forked end portion of the shank is in engagement with a spiral slot in the rotatable disc. When the rotatable disc, which is provided with a handle, is rotated, the shank is displaced in its longitudinal direction, as a guide bolt, which forms the engagement of the shank with the slot of the rotatable disc, follows the spiral of the slot to an increased or reduced distance from the centre of rotation of the rotatable disc.

The rotatable disc may be provided with a locking bolt, which, when tightened, prevents the rotatable disc from moving. The locking bolt is preferably provided with a handle.

On a reversible plough, two opposite plough skimmers are attached to one and the same mounting bracket, and the actuator is connected to an outer portion of each of the shanks. On a reversible plough, the beneficial effect of the two opposite plough skimmers straining the actuator in opposite directions is achieved; that is to say, when the downward-facing plough skimmer is to be lowered, the downward force provided by the weight of the lower plough skimmer is balanced with the power of the upward force that must be provided to lift the upward plough skimmer. In a reversible plough, it is, to a great degree, only the frictional forces that are to be overcome with the use of the present invention.

The invention relates, more specifically, to a device for the depth adjustment of a plough skimmer on a plough, in which a shank that extends up from the plough skimmer is adjustably attached in a guide arrangement in a mounting bracket arranged on the plough, characterized by an actuator arranged on the mounting bracket including means that are arranged to move the plough skimmer substantially in a vertical direction, are fixed to the mounting bracket and are connected to an end portion of the shank extending from the plough skimmer into the guide arrangement.

The mounting bracket may include a locking bolt arranged to be able to apply a clamping force, directed towards the guide sleeve, to the shank.

The mounting bracket may include a locking bolt arranged to lockingly engage with one or more recesses preferably regularly spaced in a side surface of the shank.

The actuator may be formed as a link-arm arrangement including a substantially horizontally displaceable adjustment bracket connected to the end portion of the shank via a link arm.

The actuator may be formed as a link-arm arrangement including a substantially horizontally displaceable adjustment bracket connected to the end portion of the shank via a link arm, the adjustment bracket being supported on a threaded rod.

The actuator may be formed as a rotatable disc including at least one spiral slot connected to the end portion of the shank via a guide bolt that extends through a forked end portion of the shank and through a portion of the slot.

The actuator may be connected to a motor.

The plough may be a reversible plough, and the mounting bracket may include two guide sleeves for attaching a shank each, wherein the link-arm arrangement is provided with two link arms, each connected to a shank.

Alternatively, the plough may be a reversible plough, and the mounting bracket may include two guide sleeves for attaching a shank each, wherein the rotatable disc is provided with two spiral slots, each connected to a shank.

In what follows, an example of a preferred embodiment is described, which is visualized in the accompanying drawings, in which:
- Figure 1: shows, in perspective, a reversible plough provided with plough skimmers in front of a portion of all the plough bodies of the plough;
- Figure 2: shows, in detail and on a larger scale, a first embodiment of an actuator, in which the link-arm arrangement according to the invention is used on a reversible plough for the simultaneous adjustment of two opposite plough skimmers, and in which a stone-release spring has been removed for the sake of exposition;
- Figure 3: shows in detail a second embodiment of an actuator, in which the link-arm arrangement according to the invention is used on a reversible plough for the simultaneous adjustment of two opposite plough skimmers;
- Figure 3a: shows the actuator according to figure 3 provided with a motor; and
- Figure 4: shows in detail a third embodiment of the actuator, in which a rotatable disc according to the invention is used on a reversible plough for the simultaneous adjustment of two opposite plough skimmers.

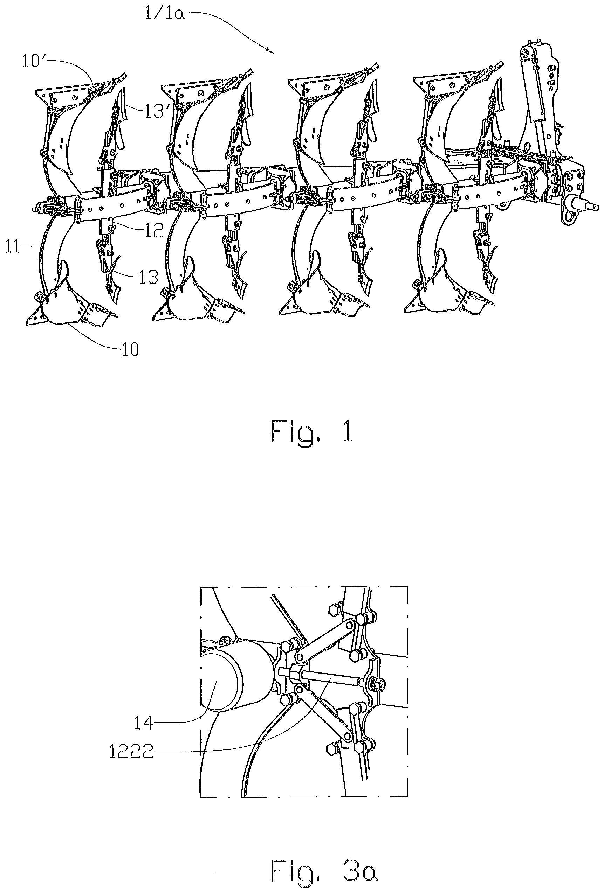

Reference is first made to figure 1, in which a plough 1 is shown as a four-furrow reversible plough 1a, provided with plough bodies 10, 10' arranged in pairs on respective plough beams 11, and in which, in front of each plough body, a plough skimmer 13, 13' is attached to a horizontal portion of the plough beam 11 by means of a mounting bracket 12.

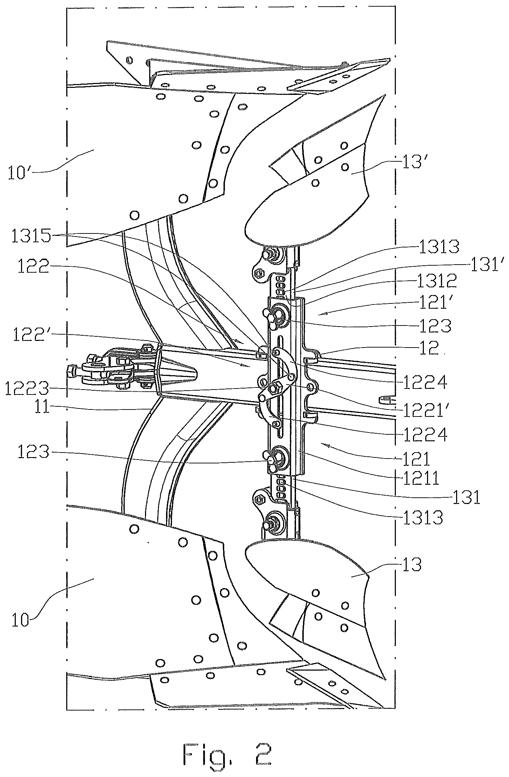

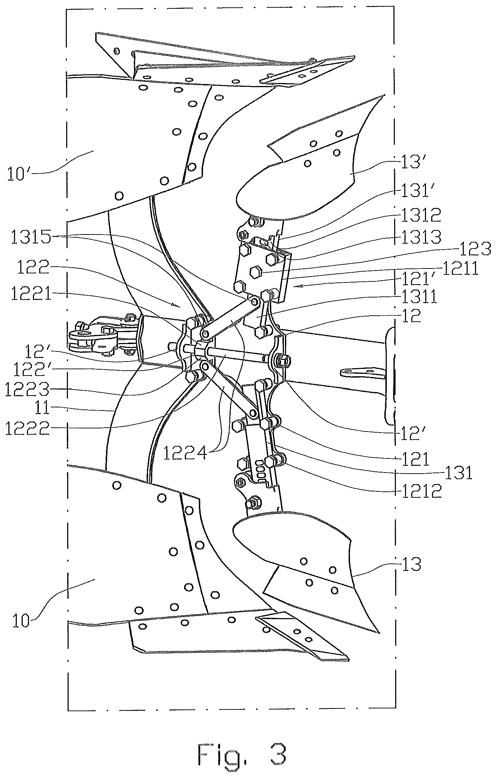

Reference is now made to figure 2, in which a section of a reversible plough 1a is shown. An actuator 122 is shown in a first exemplary embodiment as a link-arm arrangement 122'. A central arm 1221', which is pivotally supported in a mounting bracket 12 around the centre of the central arm 1221', and an upper end portion 1311 (see figure 3) of a shank 131, 131' of the plough skimmer 13, 13' are connected via link arms 1224 attached by pivot joints 1315.

In the embodiment shown according to figure 2, a guide arrangement 121 is formed as a guide sleeve 1211. The guide sleeve 1211 is provided with locking bolts 123, which are arranged to engage with one of several recesses 1313 that are arranged in a side surface 1312 of the shank 131, 131' of the plough skimmer 13, 13'.

Reference is now made to figure 3, in which a section of a reversible plough 1a is shown. An actuator 122 is shown in a second exemplary embodiment as a link-arm arrangement 122'. A threaded rod 1222, for example in the form of a hexagon screw or a hexagonal socket head cap screw, extends between two lugs 12' projecting from the mounting bracket 12 and through a threaded connecting portion 1223 of the adjustment bracket 1221. The adjustment bracket 1221 and an upper end portion 1311 of the shank 131, 131' of the plough skimmer 13, 13' are connected via link arms 1224 attached by pivot joints 1315.

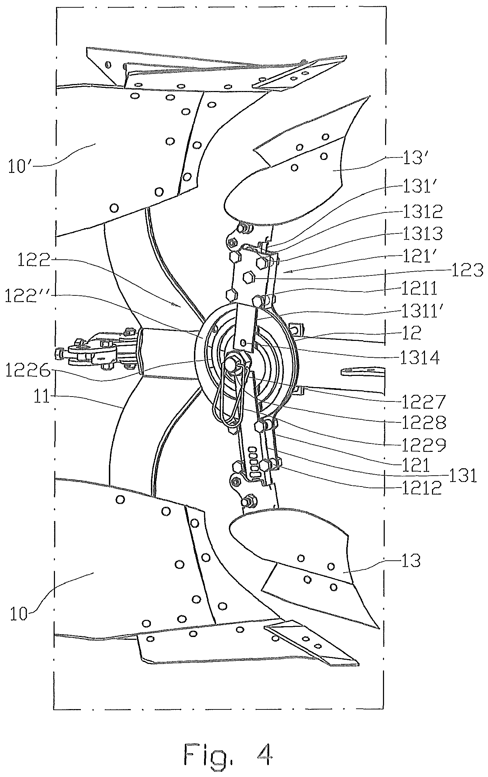

In the embodiment shown according to figures 3 and 4, a guide arrangement 121, 121' is formed as a combination of a guide sleeve 121 and several slip-in guides 1212. For the sake of exposition, the covering guide sleeve 1211 is shown only in the upper guide arrangement 121'. The guide sleeve 1211 is provided with a locking bolt 123, which is arranged to engage with one of several recesses 1313 that are arranged in a side surface 1312 of the shank 131, 131' of the plough skimmer 13, 13'.

A variant of the second exemplary embodiment is provided with a motor 14 arranged to rotate the threaded rod 1222, see figure 3a.

Reference is now made to figure 4, in which a third exemplary embodiment of the actuator 122 is shown. A rotatable disc 122", which is supported in the mounting bracket 12 on a locking bolt 1228 is provided with a spiral slot 1226. The rotatable disc 122" is arranged in a forked end portion 1311' of the shank 131, 131', and a guide bolt 1314 extends through the end portion 1311' and through the slot 1226.

The rotatable disc 122" and the locking bolt 1228 are each provided with a handle 1227, 1229 for adjusting the rotatable disc 122" and the locking bolt 1228, respectively.

When the actuator 122 is operated while the shanks 131, 131' are loose in the guide sleeve 1211, that is to say the locking bolts 123 are not in engagement with recesses 1313 in the shanks 131, 131', the plough skimmers 13, 13' are displaced substantially vertically relative to the corresponding plough body 10, 10'.

On a conventional plough (not shown), that is to say a plough with one set of plough bodies 10, the actuator is provided with one set of means, that is to say one link arm 1224 or one spiral slot 1226, for displacing the plough skimmer 13, whereas in a reversible plough 1a, two sets of means are used for the displacement of the plough skimmers 13, 13'.

## Claims

1. A device for the depth adjustment of a plough skimmer (13, 13') of a plough (1, 1a), in which a shank (131, 131') that extends up from the plough skimmer (13, 13') is adjustably attached to a guide arrangement (121, 121') in a mounting bracket (12) arranged on the plough (1, 1a), **characterized in that** an actuator (122) arranged on the mounting bracket (12) includes means (122') that are arranged to move the plough skimmer (13) substantially in a vertical direction, are attached to the mounting bracket (12) and are connected to an end portion (1311, 1311') of the shank (131, 131') extending up from the plough skimmer (13, 13') into the guide arrangement (121, 121').

2. The device according to claim 1, wherein the mounting bracket (12) includes a locking bolt (123) arranged to apply a clamping force, directed towards the guide sleeve (121, 121'), to the shank (131, 131').

3. The device according to claim 1, wherein the mounting bracket (12) includes at least one locking bolt (123) arranged to be able to lockingly engage with one of several recesses (1313) preferably regularly spaced in a side surface (1312) of the shank (131, 131').

4. The device according to claim 1, wherein the actuator (122) is formed as a link-arm arrangement (122') including a central arm (1221') pivotal around a centre axis connected to the end portion (1311) of the shank (131, 131') via a link arm (1224).

5. The device according to claim 1, wherein the actuator (122) is formed as a link-arm arrangement (122') including a substantially horizontally displaceable adjustment bracket (1221) connected to the end portion (1311) of the shank (131, 131') via a link arm (1224).

6. The device according to claim 1, wherein the actuator (122) is formed as a link-arm arrangement (122') including a substantially horizontally movable adjustment bracket (1221) connected to the end portion (1311) of the shank (131, 131') via a link arm (1224), and wherein the adjustment bracket (1221) is supported on a threaded rod (1222).

7. The device according to claim 1, wherein the actuator (122) is formed as a rotatable disc (122") including at least one spiral slot (1226) connected to the end portion (1311) of the shank (131, 131') via a guide bolt (1314) extending through a forked end portion (1311') of the shank (131, 131') and through a portion of the slot (1226).

8. The device according to claim 1, wherein the actuator (122) is connected to a motor (14).

9. The device according to claim 4, wherein the plough (1) is a reversible plough (1a) and wherein the link-arm arrangement (122') is provided with two link arms (1224), each connected to an shank (131, 131').

10. The device according to claim 5, wherein the plough (1) is a reversible plough (1a), and wherein the link-arm arrangement (122') is provided with two link arms (1224), each connected to an shank (131, 131').

11. The device according to claim 7, wherein the plough (1) is a reversible plough (1a) and wherein the rotatable disc (122") is provided with two spiral slots (1226), each connected to an shank (131, 131').

## Patentansprüche

1. Eine Vorrichtung zur Tiefeneinstellung eines Pflugabstreifers (13, 13') eines Pfluges (1, 1a), bei welchem ein Schaft (131, 131'), der sich von dem Pflugabstreifer (13, 13') nach oben erstreckt, einstellbar an einer Führungsanordnung (121, 121') in einem auf dem Pflug (1, la) angeordneten Montagebügel (12) befestigt ist, **dadurch gekennzeichnet, dass** ein auf dem Montagebügel (12) angeordneter Aktuator (122) Mittel (122') umfasst, die angeordnet sind, um den Pflugabstreifer (13) im Wesentlichen in einer vertikalen Richtung zu bewegen, am Montagebügel (12) befestigt sind und mit einem Endabschnitt (1311, 1311') des Schaftes (131, 131') verbunden sind, welcher sich von dem Pflugabstreifer (13,13') nach oben in die Führungsanordnung (121, 121') erstreckt.

2. Die Vorrichtung nach Anspruch 1, wobei der Montagebügel (12) einen Schliessbolzen (123) aufweist, der angeordnet ist, um eine gegen die (121, 121') gerichtete Klemmkraft auf den Schaft (131,131') auszuüben.

3. Die Vorrichtung nach Anspruch 1, wobei der Montagebügel (12) mindestens einen Schliessbolzen (123) umfasst, der angeordnet ist, um in eine von mehreren vorzugsweise regelmässig in einer Seitenfläche (1312) des Schaftes (131, 131') beabstandeten Ausnehmungen (1313) schliessend einzugreifen.

4. Die Vorrichtung gemäss Anspruch 1, wobei der Aktuator (122) ausgebildet ist als Verbindungsarmanordnung (122'), umfassend einen verschwenkbar um eine Zentralachse, über einen Verbindungarm (1224) mit dem Endabschnitt (1311) des Schaftes (131, 131') verbundenen Zentralarm (1221').

5. Die Vorrichtung gemäss Anspruch 1, wobei der Aktuator (122) ausgebildet ist als Verbindungarmanordnung (122'), umfassend einen im Wesentlichen horizontal verrückbaren, über einen Verbindungsarm (1224) mit einem Endabschnitt (1311) des Schaftes (131, 131') verbundenen Einstellbügel (1221).

6. Die Vorrichtung gemäss Anspruch 1, wobei der Aktuator (122) ausgebildet ist als Verbindungsarmanordnung (122'), umfassend einen im Wesentlichen horizontal beweglichen, über einen Verbindungsarm (1224) mit einem Endabschnitt (1311) des Schaftes (131, 131') verbundenen Einstellbügel (1221), und wobei der Einstellbügel (1221) auf einer Gewindestange (1221) gestützt ist.

7. Die Vorrichtung gemäss Anspruch 1, wobei der Aktuator ausgebildet ist als rotierbare Scheibe (122"), umfassend mindestens einen über einen sich durch einen gegabelten Endabschnitt (1311') des Schaftes (131, 131') und durch einen Abschnitt des Schlitzes (1226) erstreckenden Führungsbolzen (1314) mit einem Endabschnitt des Schaftes (131, 131') verbundenen Spiralschlitz (1226).

8. Die Vorrichtung gemäss Anspruch 1, wobei der Aktuator (122) mit einem Motor (14) verbunden ist.

9. Die Vorrichtung gemäss Anspruch 4, wobei der Pflug (1) ein Drehpflug (1a) ist und wobei die Verbindungsarmanordnung (122') mit zwei Verbindungsarmen (1224) versehen ist, wobei jeder mit einem Schaft (131, 131') verbunden ist.

10. Die Vorrichtung gemäss Anspruch 5, wobei der Pflug (1) ein Drehpflug (1a) ist, und wobei die Verbindungsarmanordnung (122') mit zwei Verbindungsarmen (1224) versehen ist, wobei jeder mit einem Schaft (131, 131') verbunden ist.

11. Die Vorrichtung gemäss Anspruch 7, wobei der Pflug (1) ein Drehpflug (1a) ist und wobei die rotierbare Scheibe (122") mit zwei Spiralschlitzen (1226) versehen ist, wobei jeder mit einem Schaft (131, 131') verbunden ist.

## Revendications

1. Un dispositif de réglage de la profondeur d'une rasette de charrue (13, 13') d'une charrue (1, 1a), dans lequel un étançon (131, 131') qui se prolonge vers le haut depuis la rasette de charrue (13, 13') est fixé de manière réglable à un agencement de guidage (121, 121') dans un support de fixation (12) disposé sur la charrue (1, 1a), **caractérisé en ce que** un actionneur (122) disposé sur le support de fixation (12) comprend des moyens (122') qui sont disposés de sorte à déplacer la rasette de charrue (13) dans une direction essentiellement verticale, qui sont fixés sur le support de fixation (12) et qui sont connectés à une partie terminale (1311, 1311') de l'étançon (131, 131') se prolongeant vers le haut depuis la rasette de charrue (13, 13') et à l'intérieur de l'agencement de guidage (121, 121').

2. Un dispositif selon la revendication 1, dans lequel le support de fixation (12) comprend un boulon de verrouillage (123) disposé de manière à exercer une force de serrage, dirigée vers le manchon de guidage (121, 121'), sur l'étançon (131, 131').

3. Un dispositif selon la revendication 1, dans lequel le support de fixation (12) comprend au moins un boulon de verrouillage (123) disposé le sorte à permettre un engagement verrouillant avec un ou plusieurs renfoncements (1313) préférablement espacés de manière régulière dans une surface latérale (1312) de l'étançon (131,131').

4. Un dispositif selon la revendication 1, dans lequel l'actionneur (122) est formé en tant qu'agencement de bras de raccordement (122') comprenant un bras central (1221') pivotant autour d'un axe central connecté à la partie terminale (1311) de l'étançon (131, 131') à travers un bras de liaison (1224).

5. Un dispositif selon la revendication 1, dans lequel l'actionneur (122) est formé en tant qu'agencement de bras de liaison (122') comprenant un support d'ajustement essentiellement déplaçable de manière horizontale (1221) connecté à la partie terminale (1311) de l'étançon (131,131') à travers un bras de liaison (1224).

6. Un dispositif selon la revendication 1, dans lequel l'actionneur (122) est formé en tant qu' agencement de bras de liaison (122') comprenant un support d'ajustement essentiellement déplaçable de manière horizontale (1221) connecté à la partie terminale (1311) de l'étançon (131, 131') à travers un bras de liaison (1224), et dans lequel le support d'ajustement (1221) est supporté sur une tige filetée (1222).

7. Un dispositif selon la revendication 1, dans lequel l'actionneur (122) est formé en tant que disque rotatif (122") comprenant au moins une fente en spirale (1226) connectée à la partie terminale (1311) de l'étançon (131, 131') à travers un boulon de guidage (1314) se prolongeant à travers une partie terminale en fourche (1311') de l'étançon (131, 131') et à travers une partie de la fente (1226).

8. Un dispositif selon la revendication 1, dans lequel l'actionneur (122) est connecté à un moteur (14).

9. Un dispositif selon la revendication 4, dans lequel la charrue (1) est une charrue réversible (la), et dans lequel l'agencement de bras de liaison (122') est pourvu de deux bras de liaison (1224), chacun étant connecté à un étançon (131, 131').

10. Un dispositif selon la revendication 5, dans lequel la charrue (1) est une charrue réversible (la), et dans lequel l'agencement de bras de liaison (122') est pourvu de deux bras de liaison (1224), chacun étant connecté à un étançon (131, 131').

11. Un dispositif selon la revendication 7, dans lequel la charrue (1) est une charrue réversible (1a), et dans lequel le disque rotatif (122") est pourvu de deux fentes en spirale (1226), chacune étant connectée à un étançon (131, 131').
